**Europäisches Patentamt**

**European Patent Office**

**Office européen des brevets**

(19)

(11) Numéro de publication: **0 048 667**
**B1**

(12)

# FASCICULE DE BREVET EUROPEEN

(45) Date de publication du fascicule du brevet:
**27.11.85**

(51) Int. Cl.⁴: **F 02 B 29/04**

(21) Numéro de dépôt: **81401439.5**

(22) Date de dépôt: **16.09.81**

(54) Moteurs à combustion interne fortement suralimentés et systèmes de refroidissement pour de tels moteurs.

(30) Priorité: **19.09.80 FR 8020174**

(43) Date de publication de la demande:
**31.03.82 Bulletin 82/13**

(45) Mention de la délivrance du brevet:
**27.11.85 Bulletin 85/48**

(84) Etats contractants désignés:
**AT CH GB IT LI NL SE**

(56) Documents cités:
**FR - A - 2 372 961**
**GB - A - 1 017 156**

(73) Titulaire: **Melchior, Jean F., 126 bld. de Montparnasse, F-75015 Paris (FR)**

(72) Inventeur: **Melchior, Jean F., 126 bld. de Montparnasse, F-75015 Paris (FR)**

(74) Mandataire: **Lemoine, Michel, Cabinet Michel Lemoine 13 Boulevard des Batignolles, F-75008 Paris (FR)**

ACTORUM AG

## Description

L'invention est relative aux moteurs à combustion interne, notamment aux moteurs Diesel, qui sont suralimentés par au moins un turbocompresseur et qui sont équipés d'un système de refroidissement à ventilation forcée comportant au moins un radiateur de liquide, au moins un radiateur d'air et au moins un dispositif agencé pour engendrer un flux d'air à travers les deux radiateurs et comportant des moyens générateurs de pression disposés en amont (dans le sens du flux d'air) desdits radiateurs et coopérant avec au moins un gainage qui canalise l'air vers lesdits radiateurs, les deux radiateurs étant disposés en série, par rapport au flux d'air, et le radiateur de liquide faisant partie d'un circuit fermé de refroidissement interne du moteur par liquide tandis que le radiateur d'air fait partie d'un circuit de refroidissement direct de l'air de suralimentation débité par le turbocompresseur. L'invention est également relative aux systèmes de refroidissement pour de tels moteurs suralimentés.

Par «dispositif agencé pour engendrer un flux d'air à travers les deux radiateurs», on entend des moyens générateurs de pression d'air qui coopèrent avec un ou plusieurs gainages débouchant sur tout ou partie de la surface frontale efficace desdits radiateurs. Les moyens générateurs de pression d'air peuvent être constitués par exemple d'un ou plusieurs ventilateurs refoulant l'air dans ledit gainage. Pour un véhicule, ces moyens peuvent être le véhicule lui-même qui capte l'air dans le gainage en fonction de sa propre vitesse.

Par «radiateur de liquide», on entend ici un échangeur de chaleur air/liquide dans lequel un liquide caloporteur (généralement constitué d'un mélange d'eau et de glycol), qui s'est réchauffé en refroidissant les chemises, la culasse et autres éléments du moteur tels que par exemple l'échangeur d'huile du moteur ainsi qu'éventuellement l'huile d'une transmission accouplée au moteur (boîte de vitesses, convertisseur de couple, etc.), est refroidi par échange de calories avec l'air refoulé à travers cet échangeur de chaleur air/liquide. Par «radiateur d'air», on entend ici un échangeur de chaleur air/air, dans lequel l'air de suralimentation, lorsqu'il s'est réchauffé du fait de la compression à laquelle il a été soumis dans le turbocompresseur, est refroidi, avant d'être admis au moteur, par échange de calories avec l'air refoulé à travers cet échangeur air/air.

L'invention a pour but de réduire l'encombrement et accessoirement la masse du système de refroidissement par air d'une installation motrice, par exemple du groupe moto-propulseur d'un véhicule. L'invention a également pour but de minimiser la puissance absorbée par le système de refroidissement.

Selon l'invention, ces buts sont atteints, avec un moteur fortement suralimenté et à pression moyenne effective élevée, grâce essentiellement au fait que le radiateur de liquide est disposé, non pas en aval ainsi qu'il est connu, mais en amont du radiateur d'air, dans le susdit flux d'air.

L'invention va être expliquée plus en détail à l'aide des dessins annexés qui permettent de comparer l'invention à l'état de la technique en faisant apparaître des modes de réalisation préférés de l'invention ainsi que les avantages essentiels de celle-ci.

Les figures 1 et 2 représentent schématiquement deux moteurs Diesel suralimentés qui sont équipés respectivement de systèmes de refroidissement connus, mais différents l'un de l'autre.

La fig. 3 permet d'expliquer l'activité inventive de la solution conforme à l'invention par rapport à celle des solutions connues qui est représentée à la figure 2.

La fig. 4 représente schématiquement, par une vue semblable à celles des figures 1 et 2, un moteur Diesel suralimenté conforme à un mode de réalisation particulier de l'invention.

La fig. 5 représente un perfectionnement du moteur représenté à la figure 4.

La fig. 6 montre un diagramme de fonctionnement.

La fig. 7 illustre la régulation du moteur de la figure 4, tel que modifié selon la figure 5.

Les figures 8, 9 et 10 illustrent chacune une variante d'une partie de la figure 4.

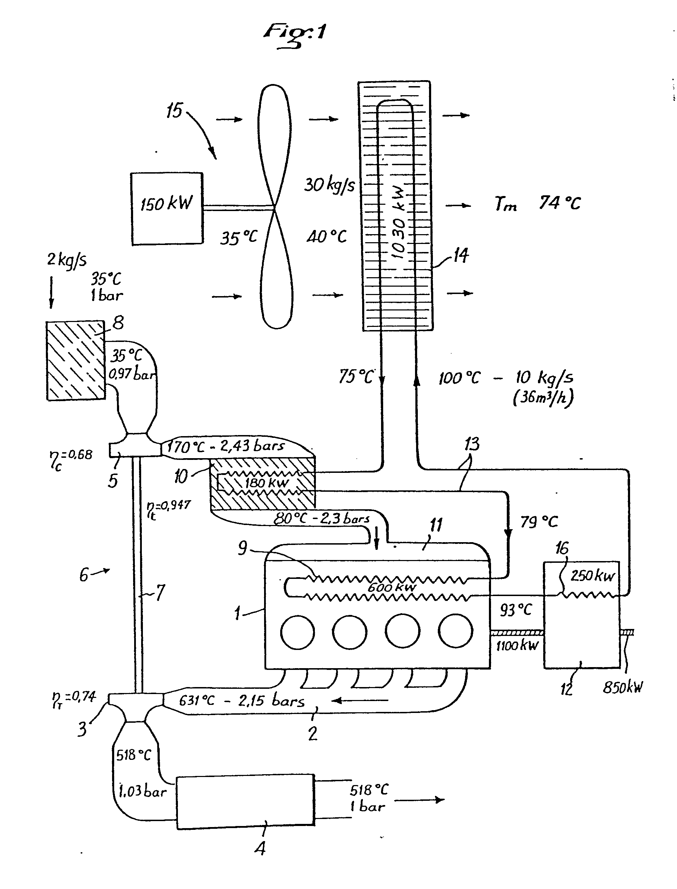

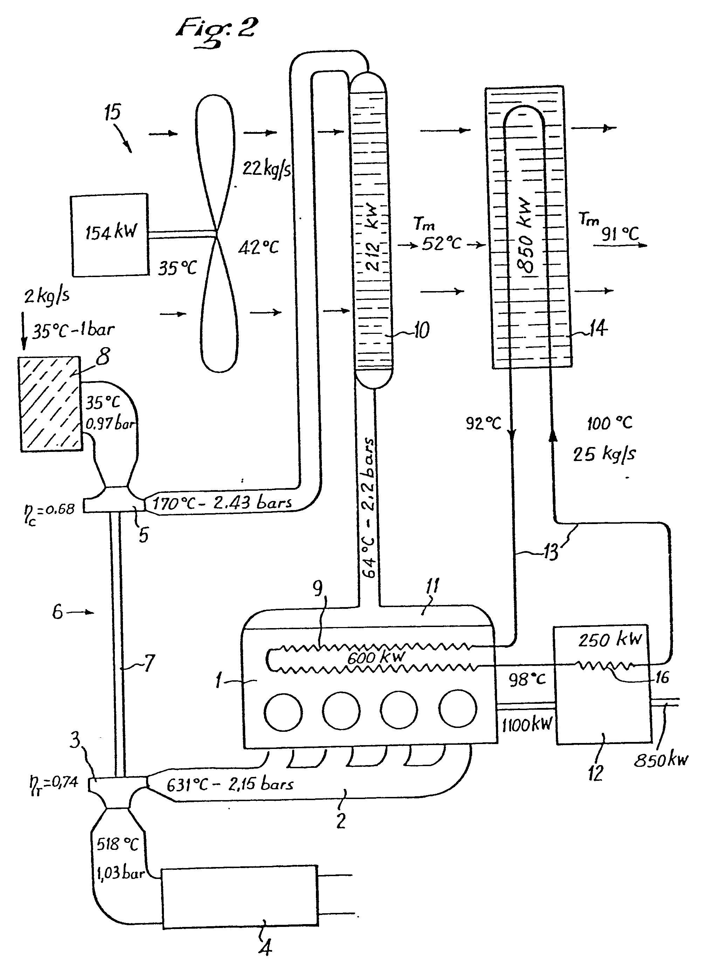

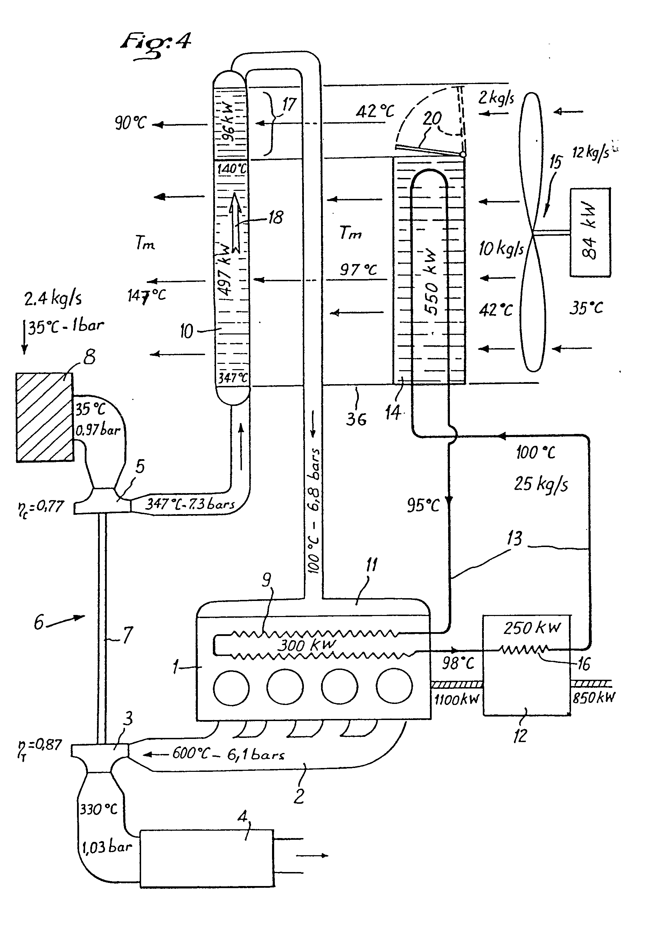

Afin de mieux faire comprendre l'invention ainsi que l'activité inventive qu'elle a nécessitée et ses avantages essentiels par rapport à l'état de la technique, il paraît utile de rappeler cet état à l'aide des figures 1 et 2.

Les système de refroidissement des groupes moto-propulseurs, dont le moteur est refroidi par un liquide, sont souvent organisés de deux façons que l'on désignera par système A (figure 1) et système B.

Dans tous les cas, on désignera ci-après par 1 le moteur à combustion interne (moteur Diesel), par 2 son collecteur d'échappement, par 3 une turbine dans laquelle débouche le collecteur d'échappement 2, par 4 un silencieux que traversent les gaz à leur sortie de la turbine, par 5 un compresseur de suralimentation constituant un turbo-compresseur 6 avec la turbine 3 et entraîné par celle-ci à l'aide d'un arbre de transmission ou semblable 7, par 8 un filtre à air monté à l'entrée du compresseur 5, par 9 une chambre de refroidissement du moteur 1, par 10 un échangeur de chaleur servant à refroidir l'air de suralimentation à la sortie du compresseur 5, par 11 le collecteur d'admission du moteur 1, par 12 une transmission, notamment une boîte de vitesses, accouplée au moteur 1, par 13 un circuit fermé de refroidissement à liquide caloporteur, par 14 un échangeur de chaleur (radiateur de liquide) incorporé au circuit 13, par 15 un ventilateur propre à créer un flux d'air dans le radiateur 14 et entraîné par le moteur 1, et par 16 un échangeur de chaleur qui est en général incorporé au circuit 13 et associé à la transmission 12 en vue de refroidir l'huile de cette transmission.

Selon le système connu A qui est illustré à la figure 1, l'échangeur de chaleur 10 est un échangeur air/liquide qui est placé dans le circuit de refroidissement 13 en aval du radiateur de liquide 14 et en amont de la chambre de refroidissement 9 du moteur 1 de façon que le liquide caloporteur du circuit refroidisse successivement l'air de suralimentation (échangeur 10), le moteur 1 (chambre de refroidissement 9) et l'huile de la transmission 12 (échangeur 16) et se refroidisse ensuite dans le radiateur 14 sous l'effet du flux d'air qui y est créé par le ventilateur 15.

La régulation de la température du liquide caloporteur est généralement assurée:

– par la vitesse de rotation du ventilateur 15, proportionnelle à la vitesse du moteur 1;
– et par divers moyens de régulation thermostatique.

Voici le bilan thermique d'un moteur Diesel à pression moyenne effective (P.M.E.) modérée (inférieur à 20 bars):

|  | kW | % |
| --- | --- | --- |
| Puissance sur l'arbre | 1100 | 36 |
| Air de suralimentation | 180 | 6 |
| Liquide caloporteur + huile/moteur | 600 | 20 |
| Echappement | 1100 | 36 |
| Rayonnement | 60 | 2 |
| Combustible | 3040 | 100 |

Avec un moteur équipé du système de refroidissement A (figure 1), la puissance à extraire du liquide de refroidissement se répartit comme suit (en kW):

| | |
| --- | --- |
| Air de suralimentation | 180 |
| Liquide + huile/moteur | 600 |
| Transmission 12 | 250 |
| | 1030 |

Pour extraire cette puissance, on adopte à titre d'exemple la solution (I) suivante:

| | |
| --- | --- |
| Débit de la pompe du circuit 13: | 36 m³/h (liquide) |
| Débit du ventilateur 15: | 30 kg/s (air) |
| Hauteur manométrique du ventilateur 15: | 0,04 bar |
| Puissance absorbée par le ventilateur: | 150 kW |
| Echauffement de l'air à travers le ventilateur: | 5°C |

A la figure 1, on a indiqué la plupart des valeurs numériques susindiquées ainsi que les valeurs des températures et des pressions aux points principaux du circuit. C'est ainsi qu'au niveau du radiateur de liquide 14, on a indiqué la température moyenne ($T_m = 74°C$) de sortie de l'air refroidisseur.

Les avantages de la solution A sont les suivants:

– système de ventilation unique;
– régulation thermique naturelle, aux basses puissances, de l'air de suralimentation, grâce à la régulation de la température du liquide de refroidissement;
– possibilité d'éloigner sans difficultés (tuyau de liquide de diamètre modéré pour le circuit 13) le radiateur 14 du moteur 1.

Les inconvénients sont les suivants:

– débit d'air de ventilation très important, donc système de ventilation très encombrant et puissance absorbée par la ventilation très importante;
– difficultés pour obtenir de basses températures d'air à l'entrée du moteur 1;
– dangers d'interférence entre le circuit de liquide et le circuit d'air.

En ce qui concerne ce dernier inconvénient, si la pression de l'air de suralimentation est supérieure à celle du liquide de refroidissement du moteur, une fuite du radiateur d'air de suralimentation 10 a pour conséquence une introduction d'air dans ce liquide, d'où risque de désamorçage de la pompe du circuit 13 et de destruction du moteur 1.

Le système connu B se distingue du système A par le fait que l'échangeur de chaleur 10 n'est pas un échangeur air/liquide, mais un échangeur air/air (radiateur d'air) indépendant du circuit 13. La régulation des deux radiateurs 10 et 14 peut être simple (le ou les ventilateurs étant actionnés en parallèle) ou double (le radiateur d'air 10 et le radiateur de liquide 14 ayant chacun leur propre ventilateur dont la régulation est indépendante de celle de l'autre ventilateur).

Dans les moteurs faiblement suralimentés, la température de l'air à l'entrée du moteur 1 est relativement faible. Avec de l'air ambiant à 40°C et un taux de suralimentation de 2,5, les températures d'air sont les suivantes:

| | | |
| --- | --- | --- |
| Ambiance | $T_1$ | $= 40°C$ |
| Sortie du compresseur 5 (entrée du radiateur 10) | $T_2$ | $= 170°C$ |
| Sortie du radiateur 10 (entrée du moteur 1) | $T'_2$ | $= 60°C$ |

Ces performances nécessitent un radiateur 10 dont le rendement thermométrique

$$\eta\,th = \frac{T_2 - T'_2}{T_2 - T_1} = \frac{100}{130} = 0,85$$

est élevé.

Dans l'exemple choisi du moteur de 1100 kW à pression moyenne effective modérée, la puissance extraite du radiateur d'air 10 est d'environ 200 kW. En revanche, la puissance à extraire du liquide 14 est beaucoup plus élevée (environ 850 kW dans l'exemple choisi). Ces deux radiateurs sont donc fortement déséquilibrés et, en cas de refroidissement par ventilateurs séparés, ils nécessiteraient des dispositifs très différents. Pour éviter cet inconvénient et compte tenu des niveaux respectifs des températures côté air (60°C) et côté liquide (100°C environ), on peut disposer différemment les radiateurs 10 et 14, comme cela est connu (voir GB-A 1 017 156) et représenté à la figure 2, en les plaçant en série, de façon que le radiateur de liquide 14 soit disposé en aval du radiateur d'air 10, dans le flux d'air engendré par le ventilateur commun 15, ce qui procure les avantages suivants:

– meilleure utilisation de la surface frontale;
– réduction du débit de ventilation;
– un seul système de ventilation.

Avec un moteur équipé de ce système de refroidissement B (figure 2), la puissance à extraire du liquide de refroidissement se répartit comme suit (en kW):

| | |
|---|---:|
| – Liquide + huile/moteur | 600 |
| – Transmission 12 | 250 |
| | 850 |

Pour extraire de cette puissance, on adopte à titre d'exemple la solution (II) suivante:

| | |
|---|---|
| – débit de la pompe du circuit 13 | 90 m³/h |
| – débit du ventilateur 15 | 22 kg/s |
| – hauteur manométrique du ventilateur 15 | 0,06 bar |
| – puissance absorbée par le ventilateur | 154 kW |
| – échauffement de l'air à travers le ventilateur | 7°C |

Cette solution (II) se distingue de la solution (I) décrite ci-dessus par un plus grand débit de la pompe du circuit 13 et par un plus petit débit du ventilateur 15. Dans le cas de la solution (II), la hauteur manométrique est égale à la perte de charge dans le radiateur d'eau 14 (0,04 bar comme précédemment), augmentée de la perte de charge du radiateur d'air 10 (0,02 bar).

Avec l'air refroidisseur à 42°C et un radiateur d'air 10 ayant un rendement thermométrique de 0,83, on obtient, pour l'air de suralimentation, une température de sortie de:

$$T'_2 = 170 - 0,83 (170 - 42) = 64°C.$$

Les avantages de la solution illustrée à la figure 2 sont:

1°) un système de ventilation unique;
2°) une réduction ou une élimination des inconvénients de la solution A par
– suppression des risques d'interférence entre les circuits d'air et de liquide;

– possibilité de réduire le débit de ventilation;
– possibilité d'obtenir de basses températures de l'air à l'entrée du moteur 1 (64°C dans l'exemple cité);
– possibilité d'augmenter le débit de la pompe du circuit 13 et de travailler avec de faibles différences de température.

En revanche, la solution illustrée à la figure 2 présente les inconvénients suivants:

1°) elle nécessite de transporter l'air de suralimentation sous pression dans des tuyaux encombrants, jusqu'au radiateur 10 lorsque celui-ci est situé loin du moteur;
2°) contrairement à la solution A, elle n'assure pas une régulation thermique naturelle par temps froid aux basses puissances; en effet, même lorsque la ventilation est arrêtée, par grand froid, le moteur 1 aspire de l'air très froid, ce qui et préjudiciable à son fonctionnement; cet inconvénient se produit même de façon transitoire, lorsque le luiquide de refroidissement du moteur 1 est chaud, du fait de la position du radiateur d'air 10 en amont.

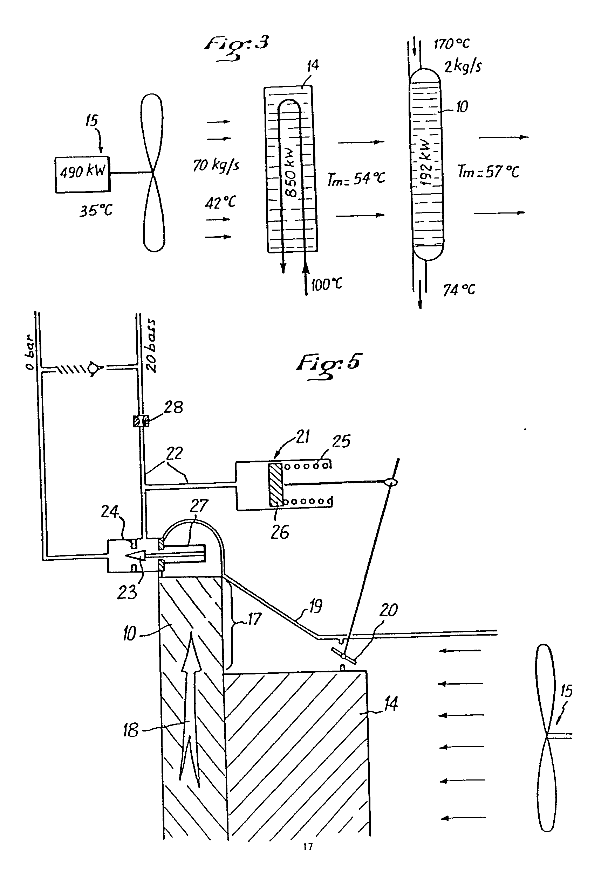

Pour éliminer ce dernier invonvénient, il est impossible d'inverser le radiateur d'air 10 et le radiateur de liquide 14, c'est-à-dire de placer le radiateur d'air 10 en aval du radiateur de liquide 14 (dans le flux d'air engendré par le ventilateur 15) comme on l'a supposé à la figure 3. En effet, si comme dans l'exemple cité en référence à la figure 2, on veut que la température de l'air de suralimentation ne dépasse pas 64°C à la sortie du radiateur 10, et si celui-ci a comme précédemment un rendement thermométrique de 0,83, il faudrait que la température moyenne à l'entrée dudit radiateur 10 soit:

$$Tm = 170 - \frac{170 - 64}{0,83} = 42°C,$$

c'est-à-dire la même température qu'à l'entrée du radiateur d'eau: il faudrait pour cela un débit de ventilation infini.

Pour obtenir une température de sortie de l'air de suralimentation de 74°C comme dans l'exemple de la figure 3 au lieu des 64°C correspondant à l'exemple de la figure 2, il faudrait un débit de ventilation de 70 kg/s (puissance absorbée 490 kW!), ce qui est tout à fait prohibitif.

Ceci étant rappelé, le moteur conforme à l'invention est du type très fortement suralimenté et à pression moyenne effective (P.M.E.) élevée (généralement supérieure à 20 bars et de préférence de l'ordre de 30 bars). Ces moteurs, à faible rapport volumétrique (R.V. de l'ordre de 7), ont un bilan thermique radicalement différent de celui des moteurs à P.M.E. modérée et s'établissant approximativement de la façon suivante:

|  | kW | % |
|---|---|---|
| Puissance sur l'arbre | 1100 | 36 |
| Air de suralimentation | 592 | 19,5 |
| Liquide caloporteur + huile/moteur | 300 | 10 |
| Echappement | 925 | 30,5 |
| Rayonnement | 123 | 4 |
|  | 3040 | 100 |

Le poste «liquide caloporteur» est diminué de moitié alors que le poste «air de suralimentation» est triplé si on les compare aux solutions dites «classiques».

La puissance thermique des radiateurs devient:

radiateur air/air 10:　　　　　　　592 kW,
radiateur air/liquide 14:　　　　　550 kW,

cette dernière valeur se décomposant en:

liquide caloporteur + huile/moteur　300 kW,
transmission 12　　　　　　　　　250 kW.

Contrairement au cas de la solution illustrée à la figure 2, on constate que les deux radiateurs d'air 10 et de liquide 14 sont sensiblement équilibrés. Par ailleurs, compte tenu de l'abaissement du rapport volumétrique des moteurs du type très fortement suralimenté et à P.M.E. élévée, ces moteurs acceptent des températures d'air d'admission plus élevées (de l'ordre de 100°C).

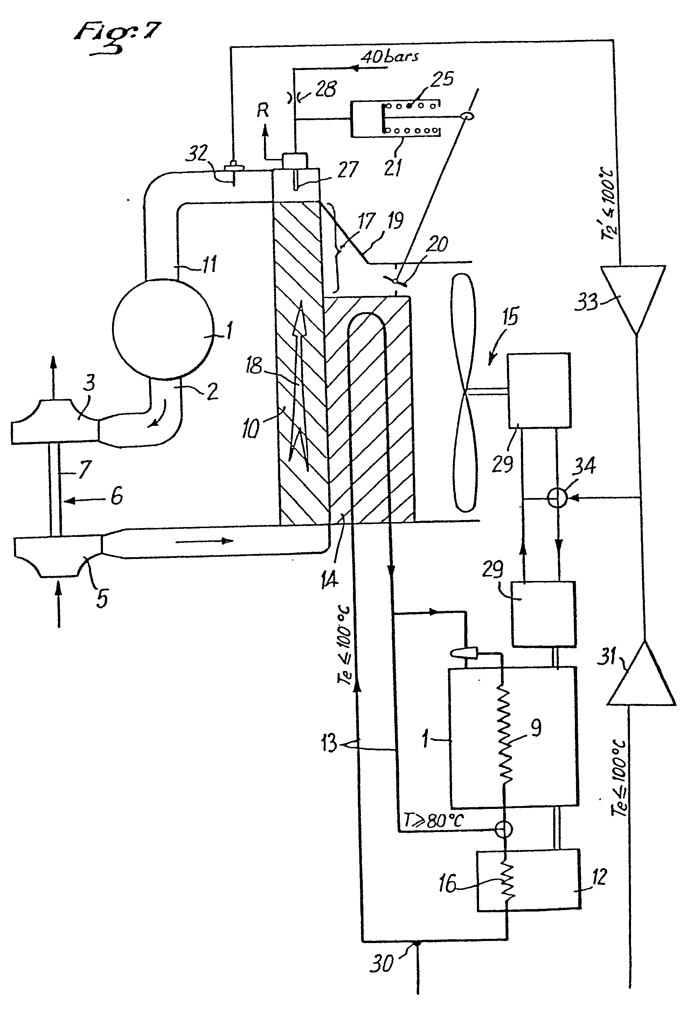

Ceci permet, conformément à l'invention, de disposer le radiateur de liquide 14, non pas en aval ainsi qu'il est connu (figure 2), mais en amont du radiateur d'air 10, dans le flux d'air engendré par le ventilateur 15, ainsi que le représente schématiquement la figure 4 où le flux d'air a été indiqué (comme d'ailleurs aux figures précédentes) par un ensemble de flèches horizontales parallèles.

Cette nouvelle disposition des radiateurs 10 et 14, qui ne découle pas d'une manière évidente de l'état de la technique ainsi qu'il ressort des explications données à propos de la figure 3, présente les avantages suivants:

1. Réduction très importante du débit de ventilation, d'où
– réduction de l'encombrement du ou des ventilateurs 15;
– réduction de la surface frontale des radiateurs 10 et 14 (ce qui entraîne une réduction des ouvertures par lesquelles l'air de ventilation entre dans le compartiment moteur et en sort);
– réduction du bruit émis par le système de ventilation.

2. A perméabilité égale des radiateurs 10 et 14, réduction considérable de la puissance absorbée par la ventilation, ainsi qu'il ressort du tableau comparatif suivant:

|  | Etat de la technique | | Invention |
|---|---|---|---|
|  | Exemple Fig. 1 | Exemple Fig. 2 | Exemple Fig. 3 |
| Hauteur manométrique (bar) | 0,04 | 0,04 + 0,02 | 0,04 + 0,02 |
| $\Delta T$ de ventilation (°C) | 5 | 7 | 7 |
| Débit de ventilation (kg/s) | 30 | 22 | 12 |
| Puissance absorbée (kW) | 150 | 154 | 84 |

3. Régulation naturelle de la température d'air de suralimentation.

En effet, lorsque le temps est très froid et que le moteur est chaud, le radiateur de liquide 14 constitue une barrière chaude protégeant le radiateur d'air 10: lors des retours transitoires aux faibles puissances, il n'y a donc pas de risque de faire caler le moteur 1 par admission d'air froid. Pour les moteurs très fortement suralimentés (à bas rapport volumétrique), le problème du fonctionnement à basse puissance est critique: cet avantage est donc déterminant. Cette possibilité est encore accrue avec des perfectionnements qui seront décrits ci-après (décalage mutuel des radiateurs 10 et 14 et régulation sur l'air refroidisseur).

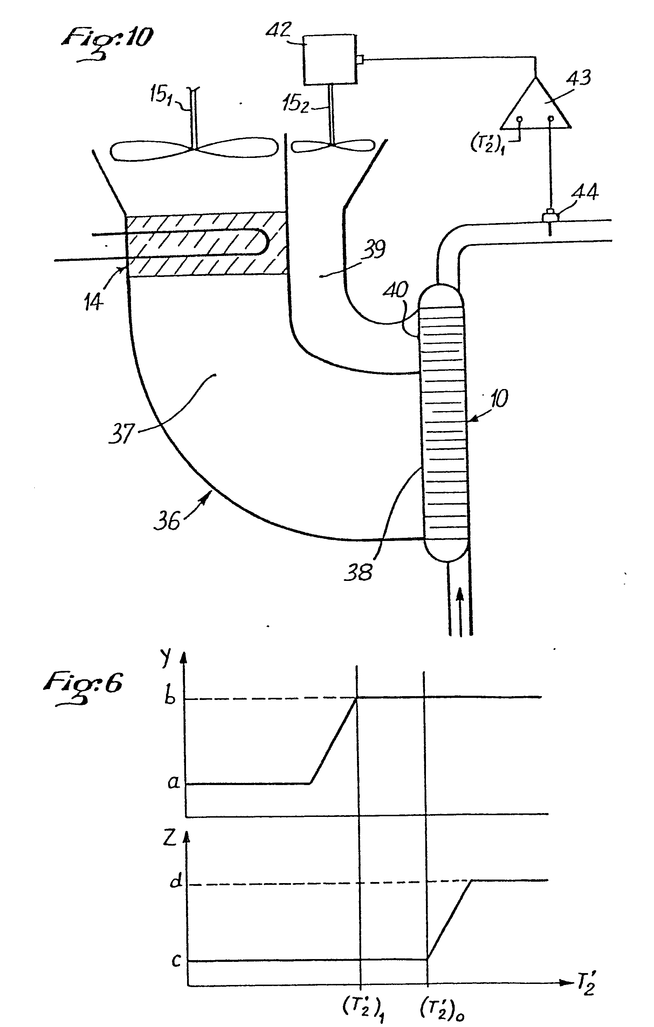

Il est à noter que les deux radiateurs 10 et 14 peuvent être aussi bien plans que de toute autre forme. Ils peuvent être aussi bien placés l'un derrière l'autre, comme dans l'exemple évoqué aux figures 4, 5 et 7, que séparés comme dans l'exemple de la figure 8. Dans ce dernier cas, le dispositif agencé pour engendrer un flux d'air à travers lesdits radiateurs 10 et 14 est constitué de moyens générateurs de pression, représentés par les flèches 35 sur la figure 8, coopérant avec un gainage 36 permettant au flux d'air de ventilation de traverser le radiateur de liquide 14 puis le radiateur d'air 10.

Selon un perfectionnement qui est illustré à la figure 9 et également aux figures 4, 5 et 7, ledit gainage 36 est subdivisé en un premier conduit 37 qui canalise une partie du flux d'air total de ventilation vers la totalité de la surface frontale efficace du radiateur de liquide 14, puis vers une partie seulement 38 de la surface frontale efficace du radiateur d'air 10, et en un second conduit 39 qui canalise directement l'autre partie du flux d'air total vers la partie restante 40 du radiateur d'air 10, sans passer à travers le radiateur de liquide 14, cette partie restante 40 étant située du côté par lequel l'air de suralimentation sort du radiateur d'air 10.

Il va de soi que les parties 38 et 40 du radiateur 10 peuvent appartenir à un seul et même radiateur ou être réalisées avec deux radiateurs d'air distincts, mis en série. Les moyens générateurs de pression, faisant circuler les flux d'air dans les conduits 37 et 39, peuvent être distincts ou communs. S'il sont distincts, comme représenté schématiquement à la figure 9, en $35_1$ et $35_2$, ils pourront être réglés indépendamment l'un de l'autre. S'ils sont communs, les flux d'air circulant dans les deux conduits 37 et 39 pourront être réglés grâce à des moyens d'étranglement à section de passage variable 41, interposés en un point quelconque du conduit 39. Ces moyens d'étranglement à section de passage variable pourront être par exemple un volet ou tout autre organe équivalent, disposé dans le conduit 39 en amont de la partie 40 du radiateur d'air 10, ou bien encore un rideau masquant plus ou moins l'entrée ou la sortie d'air refroidisseur de ladite partie 40.

Selon une disposition particulière qui est illustrée aux figures 4, 5 et 7, le radiateur d'air 10 a une surface frontale efficace supérieure à celle du radiateur de liquide 14, la partie débordante 17 du radiateur d'air 10 étant située du côté par lequel l'air de suralimentation sort de ce radiateur d'air 10 (le sens de circulation de l'air de suralimentation dans le radiateur 10 étant schématisé par une flèche 18). A cet effet, de préférence, les deux radiateurs 10 et 14 étant plans et ayant sensiblement la même largeur (dimension perpendiculaire au plan des figures 4, 5 et 7), le radiateur d'air 10 a une longueur (dimension verticale selon les figures 4, 5 et 7) plus grande que celle du radiateur de liquide 14.

Selon une solution particulièrement avantageuse, la partie débordante 17 du radiateur d'air 10 a une partie restante 40 étant située du côté par lequel l'air de suralimentation sort du radiateur d'air 10.

Il va de soi que les parties 38 et 40 du radiateur 10 peuvent appartenir à un seul et même radiateur ou être réalisées avec deux radiateurs d'air distincts, mis en série. Les moyens générateurs de pression, faisant circuler les flux d'air dans les conduits 37 et 39, peuvent être distincts ou communs. S'ils sont disctincts, comme représenté schématiquement à la figure 9, en $35_1$ et $35_2$, ils pourront être réglés indépendamment l'un de l'autre. S'ils sont communs, les flux d'air circulant dans les deux conduits 37 et 39 pourront être réglés grâce à des moyens d'étranglement à section de passage variable 41, interposés en un point quelconque du conduit 39. Ces moyens d'étranglement à section de passage variable pourront être par exemple un volet ou tout autre organe équivalent, disposé dans le conduit 39 en amont de la partie 40 du radiateur d'air 10, ou bien encore un rideau masquant plus ou moins l'entrée ou la sortie d'air refroidisseur de ladite partie 40.

Selon une disposition particulière qui est illustrée aux figures 4, 5 et 7, le radiateur d'air 10 a une surface frontale efficace supérieure à celle du radiateur de liquide 14, la partie débordante 17 du radiateur d'air 10 étant située du côté par lequel l'air de suralimentation sort de ce radiateur d'air 10 (le sens de circulation de l'air de suralimentation dans le radiateur 10 étant schématisé par une flèche 18). A cet effet, de préférence, les deux radiateurs 10 et 14 étant plans et ayant sensiblement la même largeur (dimension perpendiculaire au plan des figures 4, 5 et 7), le radiateur d'air 10 a une longueur (dimension verticale selon les figures 4, 5 et 7) plus grande que celle du radiateur de liquide 14.

Selon une solution particulièrement avantageuse, la partie débordante 17 du radiateur d'air 10 a une surface frontale sensiblement égale à 20% de la surface frontale du radiateur de liquide 14, c'est-à-dire, lorsque les deux radiateurs sont de même largeur, une longueur sensiblement égale à 20% de la longueur du radiateur de liquide.

Ce décalage mutuel des radiateurs 10 et 14 donne une grande souplesse à la régulation de température. En effet, un rendement thermométrique de l'ordre de 0,83 constitue une valeur généralement optimale au point de vue de l'encombrement du radiateur d'air 10 (un rendement de 1 correspondant à un encombrement infini). Si l'air de suralimentation pénètre à 347°C dans le radiateur 10 et que l'air de ventilation pénètre dans ce radiateur 10 à une température moyenne de 97°C (résultant de l'échauffement dans le radiateur de liquide 14 placé en amont), l'air de suralimentation sort du radiateur 10 à une température égale à $347 - 0,83 (347 - 97) = 140°C$.

A la puissance maximale, la température de l'air à l'admission du moteur 1 doit être de 100°C environ. La finition du refroidissement de l'air de suralimentation, de 140°C à 100°C, est assurée grâce à la partie débordante 17 qui reçoit l'air de refroidissement non pas à 97°C mais à 42°C étant donné que cet air de refroidissement n'a pas été réchauffé par passage dans le radiateur d'eau 14 mais uniquement sous l'effet de sa compression par le ventilateur 15.

Selon un perfectionnement illustré à la figure 5, des moyens d'étranglement, à section de passage variable, sont montés en amont (par rapport au flux d'air engendré par le ventilateur 15) de la partie débordante 17 du radiateur d'air 10. De préférence, ces moyens d'étranglement sont commandés par des moyens, sensibles à la température de l'air de suralimentation à la sortie du radiateur d'air, qui diminuent la section de passage de ces moyens d'étranglement lorsque cette température tombe au-dessous d'un seuil déterminé $(T'_2)_1$.

Si, comme cela est représenté à la figure 9, les moyens générateurs de pression, faisant circuler l'air de ventilation dans les deux conduits 37 et 39, sont distincts, ils pourront être réalisés par exemple par deux ventilateurs réglés indépendamment l'un de l'autre, comme représenté à la figure 10.

Un ventilateur principal $15_1$, entraîné par le moteur 1, alimente le premier conduit 37. Un ventilateur auxiliaire $15_2$, entraîné par un moteur électrique 42, alimente le second conduit 39. Une sonde thermométrique 44, disposée dans l'air de suralimentation à la sortie du radiateur d'air 10, est reliée à un comparateur 43 qui annule l'alimentation électrique du moteur 42 dès que la température de l'air de suralimentation tombe au-dessous d'un seuil donné $(T'_2)_1$.

Comme représenté à la figure 5, la partie débordante 16 est précédée d'un gainage ou capotage 19 destiné à canaliser l'air de refroidissement refoulé par le ventilateur 15 et court-circuitant le radiateur de liquide 14. A l'entrée du capotage 19 est placé un volet 20, ou organe d'étranglement équivalent, qui est actionné par un vérin hydraulique 21 dont la position naturelle correspond à la pleine ouverture du volet 20, ce qui assure la sécurité en cas de défaut du circuit hydraulique alimentant ce vérin 21 (fuite, rupture de tuyau, obturation, panne de pompe, etc.). Ce circuit hydraulique alimente le vérin 21 en huile sous pression par un tuyau 22 sur lequel est placé un orifice de fuite variable qui est limité par un pointeau mobile 23 à l'intérieur d'un siège fixe 24. Un ressort 25 agit sur le piston mobile 26 du vérin 21 contre l'action de l'huile sous pression admise par le tuyau 22, dans le sens qui tend à ouvrir en grand le volet 20. Le pointeau 23 est actionné par un élément thermostatique sensible à la température de sortie de l'air de suralimentation et constitué par exemple par un barreau creux 27. En se dilatant, ce barreau 27, qui porte le pointeau 23, dégage ce dernier du siège 24 au-dessus du susdit seuil de température. Ce faisant, la pression dans le vérin 21 tombe du fait de la présence d'un orifice calibré 28 entre ce vérin 21 et l'alimentation de ce dernier en huile sous pression. La chute de pression dans le vérin 21 entraîne l'ouverture du volet 20 et un accroissement du débit d'air de ventilation sur la partie débordante 17 du radiateur d'air 10. En position de pleine ouverture, la section de passage du volet 20 peut être suffisamment petite pour que la perte de charge créée par le passage du débit d'air de ventilation dans cette section soit sensiblement égale à la perte de charge à travers le radiateur de liquide 14. Toutefois, si l'encombrement le permet, le volet 20, en position de pleine ouverture, pourra être plus perméable; dans ce cas, la partie débordante 17 pourra être plus petite. Un compromis existe au point de vue de l'encombrement.

L'invention permet d'assurer aisément la régulation de la ventilation, de deux façons.

En premier lieu, le ventilateur 15 étant entraîné par le moteur 1, sa vitesse est proportionnelle à celle de ce moteur, avec un coefficient de proportionnalité de préférence réglable, à l'aide par exemple d'une liaison hydrostatique de type connu, représentée schématiquement en 29 sur la figure 7.

Ce coefficient de proportionnalité peut être modulé en fonction:

a) de la température $T_e$ du liquide à l'entrée du radiateur 14 de telle manière que cette température soit inférieure ou égale à un seuil $(T_e)_0$ (température maximale de l'eau de refroidissement);

b) de la température $T'_2$ de l'air de suralimentation à la sortie du radiateur d'air 10 de telle manière que cette température soit inférieure ou égale à un seuil $(T'_2)_0$ (température maximale de l'air pénétrant dans les cylindres du moteur 1).

A la figure 7, on a schématisé la modulation du coefficient de proportionnalité par une sonde 30 sensible à la température $T_e$, dont la sortie est reliée à un premier comparateur 31, et par une sonde 32 sensible à la température $T'_2$, dont la sortie est reliée à un deuxième comparateur 33, ces comparateurs 31 et 33 envoyant des signaux de modulation dans une commande 34 associée à la liaison hydrostatique 29 en vue de faire varier le rapport entre la vitesse d'entrée et la vitesse de sortie de cette liaison.

En second lieu, le volet 20, qui règle le débit d'air refroidisseur alimentant directement la partie débordante 17 du radiateur d'air 10, se ferme dès que la température de l'air de refroidissement tombe au-dessous d'un certain seuil $(T'_2)_1$.

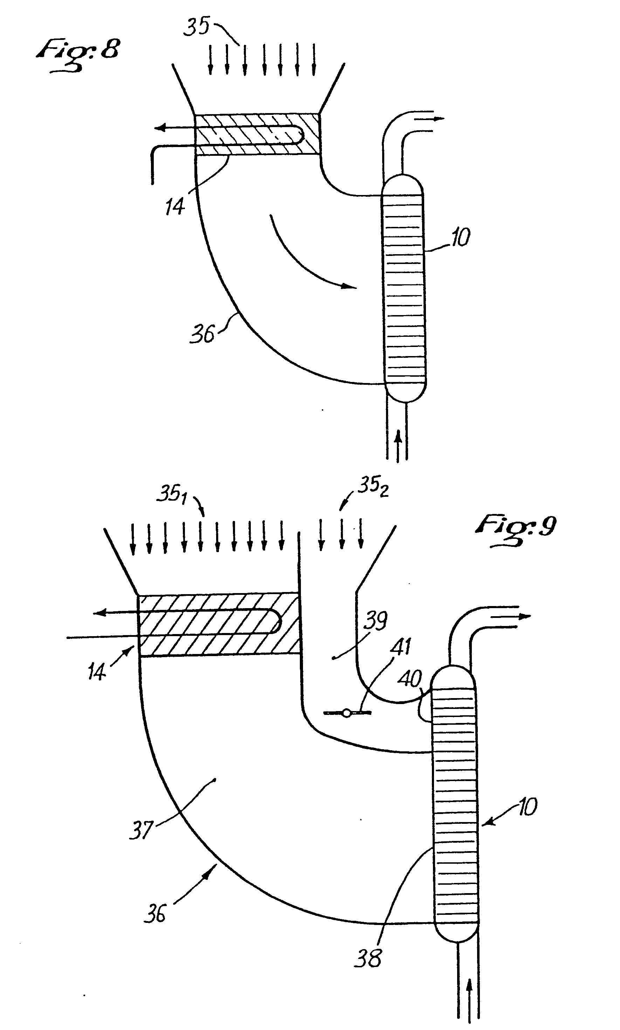

A la figure 6, on a représenté, en fonction de la température $T'_2$ de l'air de suralimentation à la sortie du radiateur d'air 10, la succession des deux types de régulation, sur un double axe des ordonnées, l'axe Y correspondant au degré d'ouverture du volet 20 et l'axe Z à la vitesse du ventilateur 15. L'ordonnée a indique la fermeture du volet 20 et l'ordonnée b sa pleine ouverture. L'ordonnée c indique la vitesse minimale du ventilateur 15 et l'ordonnée d sa vitesse maximale.

On voit que les seuils $(T'_2)_0$ et $(T'_2)_1$ ne sont pas nécessairement égaux. Pour éviter les couplages entre les deux régulations sur l'air de suralimentation, il y a même intérêt à régler les seuils de régulation de manière que $(T'_2)_1$ soit inférieur à $(T'_2)_0$.

Bien entendu, le circuit de refroidissement du moteur 1 peut être court-circuité de façon connue lorsque la température du liquide de refroidissement, à son entrée dans le moteur, est inférieure ou égale à un seuil donné, par exemple 80°C, comme on l'a indiqué de façon schématique à la figure 7.

Lors de la description des figures, il n'a été question que d'un turbocompresseur 6, d'un radiateur d'air 10, d'un radiateur de liquide 14 et d'un ventilateur 15. Il va de soi que l'invention peut tout aussi bien s'appliquer au cas où l'on disposerait en parallèle deux ou plusieurs de chacun de ces éléments.

**Revendications**

1. Moteur à combustion interne suralimenté par au moins un turbocompresseur (6) et équipé d'un système de refroidissement à ventilation forcée comportant au moins un radiateur de liquide (14), au moins un radiateur d'air (10) et au moins un dispositif agencé pour engendrer un flux d'air à travers les deux radiateurs (14, 10) et comportant des moyens générateurs de pression d'air (15) coopérant avec au moins un gainage (36) qui canalise l'air vers lesdits radiateurs (14, 10), les deux radiateurs (14, 10) et les moyens générateurs de pression d'air (15) étant disposés en série, par rapport au flux d'air, et le radiateur de liquide (14) faisant partie d'un circuit fermé de refroidissement interne du moteur (1) par liquide tandis que le radiateur (10) fait partie d'un circuit de refroidissement direct de l'air de suralimentation débité par le turbocompresseur (6), caractérisé en ce que, le moteur (1) étant fortement suralimenté et ayant une pression moyenne effective élevée supérieure à 20 bars et de préférence de l'ordre de 30 bars, le radiateur de liquide (14) est disposé en amont du radiateur d'air (10), dans le susdit flux d'air et l'énergie thermique extraite de l'air de suralimentation dans le radiateur d'air (10) est égale à environ 2 fois l'énergie thermique extraite du liquide de refroidissement du moteur (1) seul.

2. Moteur selon la revendication 1, caractérisé en ce que les susdits moyens générateurs de pression sont constitués par au moins un ventilateur (15) refoulant l'air dans ledit gainage (36).

3. Moteur selon l'une des revendications 1 et 2, caractérisé en ce que ledit gainage (36) comporte un premier conduit (37) qui canalise une première partie du flux d'air total sur la totalité du radiateur de liquide (14), puis sur une partie (38) du radiateur d'air (10), et un second conduit (39) qui canalise la partie complémentaire du flux d'air total directement sur la partie restante (40) du radiateur d'air (10), située près de la sortie d'air de suralimentation dudit radiateur d'air (10).

4. Moteur selon la revendication 3, caractérisé en ce que les deux conduits (37, 39) comportent chacun des moyens générateurs de pression ($35_1$, $35_2$) qui sont indépendants les uns des autres.

5. Moteur selon la revendication 3, caractérisé en ce que les deux conduits canalisent des flux d'air provenant des mêmes moyens générateurs de pression (15) et en ce que le second conduit comporte des moyens d'étranglement (20) à section de passage variable.

6. Moteur selon la revendication 5, caractérisé en ce que les moyens d'étranglement (20) sont commandés par des moyens (27), sensibles à la température de l'air de suralimentation à la sortie du radiateur d'air (10), qui diminuent la section de passage de ces moyens d'étranglement (20) dès que ladite température tombe au-dessous d'un seuil déterminé $(T'_2)_1$.

7. Moteur selon la revendication 4, caractérisé en ce que les moyens générateurs de pression alimentant le second conduit sont constitués par au moins un ventilateur (15) commandé par des moyens, sensibles à la température de l'air de suralimentation à la sortie du radiateur d'air (10, qui agissent pour arrêter le ventilateur (15) dès que ladite température tombe au-dessous d'un seuil déterminé $(T'_2)_1$.

8. Moteur selon l'une des revendications 1 et 2, caractérisé en ce que le radiateur d'air (10) a une surface frontale efficace supérieure à celle du radiateur de liquide (14) et est placé sensiblement contre la sortie d'air du radiateur de liquide (14), la partie débordante du radiateur d'air (10) étant située du côté par lequel l'air de suralimentation sort de ce radiateur d'air (10).

9. Moteur selon la revendication 8, caractérisé en ce que, le radiateur d'air (10) et le radiateur de liquide (14) étant plans et ayant sensiblement la même largeur, le radiateur d'air (10) a une longueur plus grande que celle du radiateur de liquide (14).

10. Moteur selon l'une quelconque des revendications 8 et 9, caractérisé en ce que la partie débordante (17) du radiateur d'air (10) a une surface frontale sensiblement égale à 20% de la surface frontale du radiateur de liquide (14).

11. Moteur selon l'une quelconque des revendications 8 à 10, caractérisé en ce que des moyens d'étranglement (20), à section de passage variable, sont montés en amont, par rapport au flux d'air, de la partie débordante (17) du radiateur d'air (10).

12. Moteur selon la revendication 2 considérée isolément ou en combinaison avec l'une quelconque des revendications 3 à 11, caractérisé en ce que le moteur (1) entraîne le ventilateur (15) par l'intermédiaire d'une liaison (29) à coefficient de proportionnalité réglable.

13. Moteur selon la revendication 12, caractérisé en ce que le coefficient de proportionnalité est réglable en fonction de la température du liquide, à l'entrée du radiateur de liquide (14), et en fonction de la température de l'air de suralimentation, à la sortie du radiateur d'air (10), de façon à empêcher ces températures de dépasser respectivement des seuils $(T_e)_0$ et $(T'_2)_0$.

14. Moteur selon la revendication 13, caractérisé en ce que les seuils $(T'_2)_0$ et $(T'_2)_1$ de mise en œuvre des régulations sur l'air de suralimentation sont tels que $(T'_2)_1$ soit inférieur à $(T'_2)_0$.

15. Système de refroidissement pour moteur suralimenté selon l'une quelconque des revendications 1 à 14.

**Patentansprüche**

1. Verbrennungsmotor, der durch zumindest einen Turbokompressor (6) hochaufgeladen wird und mit einem Kühlsystem mit künstlicher Belüftung ausgestattet ist, das mindestens einen Flüssigkeitskühler (14), wenigstens einen Luftkühler (10) und zumindest eine Einrichtung zum Erzeugen eines Luftstromes durch die beiden Kühler (14, 10) aufweist, sowie Luftdruckgeneratoreinrichtungen (15), die mit wenigstens einem Hüllrohr (36) zusammenwirken das die Luft zu den Kühlern (14, 10) leitet, wobei die beiden Kühler (14, 10) und die Luftdruckgeneratoreinrichtungen (15) bezüglich des Luftstromes in Serie geschaltet sind und der Flüssigkeitskühler (14) Teil eines geschlossenen Kreislaufes der internen Flüssigkeitskühlung des Motors (1) ist, wogegen der Luftkühler (10) Teil eines Kreislaufes der direkten Kühlung der vom Turbokompressor (6) abgegebenen Aufladeluft ist, dadurch gekennzeichnet, dass der Motor (1) hochaufgeladen ist und einen mittleren wirksamen Druck oberhalb von 20 bar und vorzugsweise in der Grössenordnung von 30 bar besitzt, dass der Flüssigkeitskühler (14) im Luftstrom dem Luftkühler (10) vorgeschaltet ist, und dass die der Aufladeluft im Luftkühler (10) entzogene Wärmeenergie etwa gleich dem Zweifachen der der Kühlflüssigkeit des Motors (1) alleine entzogenen Wärmeenergie ist.

2. Motor nach Anspruch 1, dadurch gekennzeichnet, dass die Druckgeneratoreinrichtungen aus mindestens einem Lüfter (15) bestehen, der die Luft in das Hüllrohr (36) zurückdrückt.

3. Motor nach Anspruch 1 oder 2, dadurch gekennzeichnet, dass das Hüllrohr (36) in einen ersten Kanal (37) – der einen ersten Teil des gesamten Luftstromes dem gesamten Flüssigkeitskühler (14) und anschliessend einem Teil (38) des Luftkühlers (10) zuführt – und in einen zweiten Kanal (39) unterteilt ist, der den komplementären Teil des gesamten Luftstromes direkt auf den restlichen, sich in der Nähe des Aufladeluftaustrittes des Luftkühlers (10) befindenden Teil (40) des Luftkühlers (10) zuführt.

4. Motor nach Anspruch 3, dadurch gekennzeichnet, dass die beiden Kanäle (37, 39) mit jeweils voneinander unabhängigen Druckgeneratoreinrichtungen $(35_1, 35_2)$ ausgestattet sind.

5. Motor nach Anspruch 3, dadurch gekennzeichnet, dass die beiden Kanäle Luftströme leiten, die von denselben Druckgeneratoreinrichtungen (15) hervorgerufen werden, und dass der zweite Kanal Drosseleinrichtungen (20) veränderlichen Durchgangsquerschnittes aufweist.

6. Motor nach Anspruch 5, dadurch gekennzeichnet, dass die Drosselungseinrichtungen (20) von temperaturempfindlichen Einrichtungen (27) für die Aufladeluft am Ausgange des Luftkühlers (10) gesteuert sind, die den Durchgangsquerschnitt dieser Drosselungseinrichtungen (20) verringern, sobald diese Temperatur unter eine bestimmte Schwelle $(T'_2)_1$ fällt.

7. Motor nach Anspruch 4, dadurch gekennzeichnet, dass die Druckgeneratoreinrichtungen, die den zweiten Kanal versorgen, aus mindestens einem Lüfter (15) bestehen, der von temperaturempfindlichen Einrichtungen für die Aufladeluft am Ausgange des Luftkühlers (10) gesteuert ist, die den Lüfter (15) abschalten, sobald diese Temperatur unter eine bestimmte Schwelle $(T'_2)_1$ fällt.

8. Motor nach Anspruch 1 oder 2, dadurch gekennzeichnet, dass der Luftkühler (10) eine grössere wirksame Stirnfläche hat als der Flüssigkeitskühler (14) und im wesentlichen gegen den Luftaustritt des Flüssigkeitskühlers (14) zu angeordnet ist, wobei sich der überstehende Teil des Luftkühlers (10) an der Seite des Austritts der Aufladeluft aus diesem Luftkühler (10) befindet.

9. Motor nach Anspruch 8, dadurch gekennzeichnet, dass der Luftkühler (10) und der Flüssigkeitskühler (14) flach sind und im wesentlichen dieselbe Breite haben, und dass der Luftkühler (10) eine grössere Länge als der Flüssigkeitskühler (14) besitzt.

10. Motor nach Anspruch 8 oder 9, dadurch gekennzeichnet, dass die Stirnfläche des überstehenden Teils (17) des Luftkühlers (10) im wesentlichen 20% der Stirnfläche des Flüssigkeitskühlers (14) entspricht.

11. Motor nach einem der Ansprüche 8 bis 10, dadurch gekennzeichnet, dass Drosselungseinrichtungen (20) veränderlichen Durchgangsquerschnittes vor dem überstehenden Teil (17) des Luftkühlers (10), bezogen auf den Luftstrom, angebracht sind.

12. Motor nach Anspruch 2 einzeln oder in Verbindung mit einem der Ansprüche 3 bis 11, dadurch gekennzeichnet, dass der Motor (1) den Lüfter (15) durch eine Verbindung (29) mit einstellbarem Proportionalitätsfaktor antreibt.

13. Motor nach Anspruch 12, dadurch gekennzeichnet, dass der Proportionalitätsfaktor in Abhängigkeit von der Flüssigkeitstemperatur am Eintritt in den Flüssigkeitskühler (14) und von der Temperatur der Aufladeluft am Austritt aus dem Luftkühler (10) regelbar ist, um zu verhindern, dass diese Temperaturen die Schwellen $(T_e)_0$ bzw. $(T'_2)_0$ überschreiten.

14. Motor nach Anspruch 13, dadurch gekennzeichnet, dass die Schwellen $(T'_2)_0$ und $(T'_2)_1$ zur Durchführung der Regelung in bezug auf die Aufladeluft so sind, dass $(T'_2)_1$ kleiner als $(T'_2)_0$ ist.

15. Kühlsystem für einen hochaufgeladenen Motor nach einem der Ansprüche 1 bis 14.

**Claims**

1. Internal combustion engine supercharged by at least one turbocompressor (6) and provided with a forced ventilation cooling system comprising at least one liquid radiator (14), at least one air radiator (10), and at least one device arranged to generate an air-flow through the two radiators (14, 10) and comprising air pressure generating means (15) cooperating with at least one sheathing (36) which channels the air to said radiators (14, 10), the two radiators (14, 10) and the air pressure generating means (15) being arranged in series, with respect to the air-flow, and the liquid radiator (14) forming part of a closed circuit for the internal liquid cooling of the engine (1) whilst the air radiator (10) forms part of a direct cooling circuit for the supercharging air delivered by the turbocompressor (6), characterized in that, the engine (1) being highly supercharged and having a high mean effective pressure higher than 20 bars and preferably on the order of 30 bars, the liquid radiator (14) is arranged upstream of the air radiator (10), in the above-said air-flow and the thermal energy extracted from the supercharging air in the air radiator (10) being equal to about twice the thermal energy extracted from the engine cooling liquid only.

2. Engine according to claim 1, characterized in that said pressure generating means are constituted by at least one blower (15) delivering air into said sheathing (36).

3. Engine according to claim 1 or 2, characterized in that said sheathing (36) comprises a first duct (37) which channels a first portion of the total air-flow onto the whole of the liquid radiator (14), then onto a part (38) of the air radiator (10), and a second duct (39) which channels the complementary portion of the total air-flow directly onto the remaining part (40) of the air radiator (10), situated close to the supercharging air outlet of said air radiator (10).

4. Engine according to claim 3, characterized in that the two ducts (37, 39) each comprise pressure generating means $(35_1, 35_2)$ which are independent of one another.

5. Engine according to claim 3, characterized in that the two ducts channel air-flows coming from the same pressure generating means (15) and in that the second duct comprises throttling means (20) with variable passage cross-section.

6. Engine according to claim 5, characterized in that the throttling means (20) are controlled by means (27), sensitive to the supercharging air temperature at the outlet of the air radiator (10), which reduce the passage cross-section of these throttling means (20) as soon as said temperature drops below a certain threshold $(T'_2)_1$.

7. Engine according to claim 4, characterized in that the pressure generating means supplying the second duct are constituted by at least one blower (15) controlled by means, sensitive to the supercharging air temperature at the outlet of the air radiator (10), which operate to stop the blower (15) as soon as said temperature drops below a certain threshold $(T'_2)_1$.

8. Engine according to claim 1 or 2, characterized in that the air radiator (10) has an effective front surface greater than that of the liquid radiator (14) and is placed substantially against the air outlet of the liquid radiator (14), the overlapping part of the air radiator (10) being situated on the side through which the supercharging air emerges from said air radiator (10).

9. Engine according to claim 8, characterized in that the air radiator (10) and the liquid radiator (14) being flat and having substantially the same width, the air radiator (10) has a greater length than that of the liquid radiator (14).

10. Engine according to claim 8 or 9, characterized in that the overlapping part (17) of the air radiator (10) has a front surface substantially equal to 20% of the front surface of the liquid radiator (14).

11. Engine according to anyone of claims 8 to 10, characterized in that throttle means (20), of variable passage cross-section, are mounted upstream, with respect to the air-flow, of the overlapping part (17) of the air radiator (10).

12. Engine according to claim 2 considered alone or in combination with any one of claims 3 to 11, characterized in that the engine (1) drives the blower (15) through a coupling (29) with an adjustable proportionality coefficient.

13. Engine according to claim 12, characterized in that the proportionality coefficient is adjustable as a function of the temperature of the liquid, at the inlet of the liquid radiator (14), and as a function of the temperature of the supercharging air, at the outlet of the air radiator (10), so as to prevent these temperatures from exceeding thresholds $(T_e)_o$ and $(T'_2)_o$, respectively.

14. Engine according to claim 13, characterized in that the thresholds $(T'_2)_o$ and $(T'_2)_1$ for effecting adjustments of the supercharging air are such that $(T'_2)_1$ is less than $(T'_2)_o$.

15. Cooling system for a supercharged engine according to any one of the claims 1 to 14.

*Fig.1*

Fig: 2

Fig: 4

Fig. 3

Fig. 5

Fig.7

Fig. 8

Fig. 9

Fig:10

15₁

15₂

42

43

$(T_2')_1$

44

14

39

40

37

10

36

38

Fig:6

y

b

a

Z

d

c

$(T_2')_1$   $(T_2')_0$

$T_2'$